# FASCICULE DE BREVET EUROPEEN

(11) **EP 2 852 501 B1**
(45) Date de publication et mention de la délivrance du brevet: **30.11.2016**
(21) Numéro de dépôt: 13729977.2
(22) Date de dépôt: 16.05.2013
(51) Int. Cl.: B60J 1/02, B60J 1/18, B62D 25/04, B62D 29/04

(54) **PARE-BRISE HYBRIDE POUR VEHICULE COMPRENANT UNE COQUE EN POLYCARBONATE POURVUE D'UN INSERT EN VERRE FEUILLETÉ**
HYBRIDWINDSCHUTZSCHEIBE FÜR FAHRZEUGE, MIT EINEM RAHMEN AUS POLYCARBONAT, WELCHER EINEN EINSATZ AUS LAMINIERTEM GLAS AUFWEIST
HYBRID WINDSHIELD FOR VEHICLE COMPRISING A POLYCARBONATE SHELL PROVIDED WITH A LAMINATED GLASS INSERT

(30) Priorité: 21.05.2012 FR 1254595
(43) Date de publication de la demande: 01.04.2015
(73) Titulaire: Peugeot Citroën Automobiles SA, 78140 Vélizy Villacoublay (FR)
(72) Inventeur: SIN, Yong Wook, F-92350 Le Plessis Robinson (FR)
(86) Numéro de dépôt international: PCT/FR2013/051081
(87) Numéro de publication internationale: WO 2013/175104

(56) Documents cités:
- DE-A1-102004 008 006
- US-A- 4 059 469

## Description

La présente invention se rapporte au domaine général des vitrages de véhicules, et notamment de véhicules automobiles, tels que pare-brise, lunettes arrière, ou fenêtres.

En particulier, elle se rapporte à un élément de vitrage selon le préambule de la revendication 1, ainsi que à un procédé de fabrication d'un tel élément. Un tel élément est connu de DE 102004008006 A.

On connaît divers agencements de vitrages pour véhicules, et notamment, par le document FR-2 957 556, des pare-brise panoramiques qui comprennent plusieurs éléments vitrés séparés, assemblés dans différentes baies délimitées par des encadrements, de sorte à former respectivement un pan frontal de type pare-brise en verre feuilleté, des rabats latéraux de type fenestrons, et un rabat supérieur de type toit panoramique.

Si de tels pare-brise présentent d'indéniables avantages, notamment en procurant un large champ visuel et un bon apport de lumière qui contribuent au confort visuel du conducteur et à l'agrément des passagers, ainsi qu'à la sécurité de la conduite, ils peuvent toutefois souffrir de certains inconvénients.

En premier lieu, la présence des montants et encadrements nécessaires au maintien des panneaux vitrés tend, malgré l'importance de la surface vitrée, à limiter le champ visuel du conducteur.

En outre, la multiplication des surfaces vitrées et des encadrements associés tend à compliquer l'agencement du châssis du véhicule, à occasionner un surcroît d'opérations de fabrication et d'assemblage, et par conséquent à augmenter le temps et le coût de production dudit véhicule.

Enfin, de tels vitrages peuvent présenter un poids particulièrement élevé, en raison de l'utilisation de panneaux en verre feuilleté, ce matériau étant en effet privilégié pour satisfaire aux normes relatives à la sécurité en cas de choc.

Les objets assignés à l'invention visent par conséquent à remédier aux inconvénients susmentionnés et à proposer un nouvel élément de vitrage pour véhicule qui soit particulièrement léger et facile à mettre en oeuvre, tout en procurant un large champ visuel et en présentant une grande solidité.

Un autre objet assigné à l'invention vise à proposer un nouveau procédé de fabrication d'éléments de vitrage de véhicule qui soit particulièrement simple, rapide et économe à mettre en oeuvre, et qui présente une bonne capacité d'adaptation à une grande variété de formes et de dimensions d'éléments de vitrage.

Les objets assignés à l'invention sont atteints à l'aide d'un élément de vitrage pour véhicule comprenant une pièce d'infrastructure qui est réalisée dans un matériau polymère transparent, lequel est agencé de sorte à former une paroi transparente, et au moins un insert en verre feuilleté qui est fixé sur ladite pièce d'infrastructure de manière à se superposer à l'épaisseur de la paroi transparente sur une partie de la superficie de ladite paroi transparente, de telle sorte que l'élément de vitrage présente au moins une première fenêtre renforcée correspondant à la portion de paroi transparente recouverte par l'insert et au moins une seconde fenêtre allégée correspondant à la portion de paroi transparente dépourvue de verre feuilleté

Les objets assignés à l'invention sont également atteints à l'aide d'un procédé de fabrication d'un élément de vitrage pour véhicule comprenant une étape (a) de réalisation d'une pièce d'infrastructure au cours de laquelle on met en forme, par exemple par moulage par injection, un matériau polymère transparent, de préférence du polycarbonate, pour créer une paroi transparente de forme prédéterminée, puis une étape (b) de différenciation par feuilletage au cours de laquelle on fixe sur ladite pièce d'infrastructure, de préférence au moyen d'une couche en polyuréthane thermoplastique, un insert en verre feuilleté couvrant une superficie de ladite pièce d'infrastructure strictement inférieure à la superficie totale de ladite pièce d'infrastructure, de sorte à créer, au sein de l'élément de vitrage, au moins une première fenêtre renforcée correspondant à la portion de paroi transparente recouverte par l'insert et au moins une seconde fenêtre allégée correspondant à la portion de paroi transparente dépourvue de verre feuilleté.

Avantageusement, l'invention permet de réaliser un élément de vitrage intégralement, ou quasi-intégralement, à partir de matériaux transparents, ce qui garantit une parfaite visibilité à travers ledit élément de vitrage, en tout point de ce dernier et quel que soit l'angle selon lequel le regard se porte, depuis l'intérieur de l'habitacle du véhicule vers l'extérieur.

En outre, en combinant d'une part une infrastructure transparente légère réalisée dans un matériau polymère, de préférence organique, de densité inférieure à celle du verre, avec d'autre part un insert en verre feuilleté, dont la robustesse et la résistance aux agressions extérieures, et notamment aux chocs aux rayures, est avérée, l'invention permet d'obtenir une structure mixte, ou « hybride », regroupant fenêtre(s) renforcée(s) et fenêtre(s) allégée(s), qui allège globalement l'élément de vitrage tout en conservant les qualités optiques et mécaniques globales élevées de celui-ci.

A ce titre, les fenêtres renforcées pourront avantageusement correspondre aux zones d'homologation, les plus exposées et/ou les plus critiques en matière de qualité de visibilité ou de tenue au choc, telles que, par exemple le panneau frontal du pare-brise.

De surcroît, l'utilisation d'un polymère, avantageusement thermoplastique, plus facile à travailler que le verre minéral, autorise une mise en forme aisée, par exemple par moulage par injection ou par thermoformage, de la pièce d'infrastructure, dans des conditions relativement peu sévères, et ce quelle que soit la variété ou la complexité des formes de ladite pièce d'infrastructure.

En particulier, il devient possible de couvrir d'un seul tenant, sans interruption, à l'aide d'une seule et même pièce d'infrastructure, plusieurs surfaces vitrées qui étaient jusqu'à présent réalisées dans des panneaux séparés par des montants.

En outre, l'élément de vitrage ainsi obtenu forme avantageusement un sous-ensemble d'habillage complet, manipulable et insérable d'un seul tenant.

Il en résulte une économie de temps et de moyens lors de la fabrication dudit élément de vitrage, ou de l'assemblage de celui-ci sur le véhicule, et par conséquent un gain de productivité.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective de dessus, une variante de réalisation d'élément de vitrage conforme à l'invention.
La figure 2 illustre, selon une vue en perspective éclatée, une possibilité de réalisation d'élément de vitrage conforme à l'invention.
La figure 3 illustre, selon une vue en coupe transverse à l'arête de l'élément de vitrage, le détail d'une variante de jonction de l'insert en verre feuilleté sur une infrastructure en polymère, conformément à l'invention.
La figure 4 illustre, selon une vue en coupe transverse à l'arête de l'élément de vitrage, le détail d'une autre variante de jonction de l'insert en verre feuilleté sur une infrastructure en polymère, conformément à l'invention.
La figure 5 illustre, selon une vue en coupe transverse à l'arête de l'élément de vitrage, le détail d'une troisième variante de jonction de l'insert en verre feuilleté sur une infrastructure en polymère, conformément à l'invention, ladite variante mettant en oeuvre un joint-insert en caoutchouc.

La présente invention se rapport à un élément de vitrage 1 pour véhicule (non représenté).

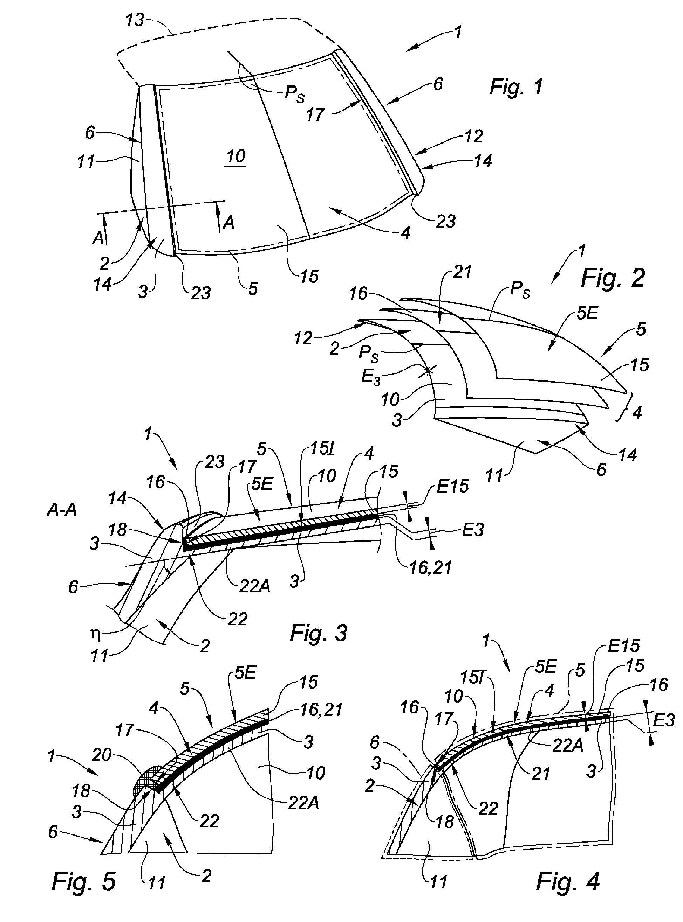

Ledit élément de vitrage est avantageusement destiné à former une cloison transparente, le cas échéant à plusieurs pans, séparant l'intérieur de l'habitacle de l'environnement du véhicule, et peut former de préférence un pare-brise, tel que cela est illustré sur la figure 1, ou bien une lunette arrière.

Elle concerne bien entendu en tant que tel un véhicule, et notamment un véhicule automobile, équipé d'un tel élément de vitrage 1.

Selon l'invention, ledit élément de vitrage 1 pour véhicule comprend d'une part une pièce d'infrastructure 2 qui est réalisée dans un matériau polymère transparent, lequel est agencé de sorte à former une paroi transparente 3, et d'autre part au moins un insert 4 en verre feuilleté qui est fixé sur ladite pièce d'infrastructure 2 de manière à se superposer à l'épaisseur E3 de la paroi transparente 3 sur une partie de la superficie de ladite paroi transparente 3, de telle sorte que l'élément de vitrage 1 présente au moins une première fenêtre renforcée 5 correspondant à la portion de paroi transparente recouverte par l'insert 4, telle que schématisée par exemple en trait mixte sur la figure 1 ou la figure 4, et au moins une seconde fenêtre allégée 6 correspondant à la portion de paroi transparente 3 dépourvue de verre feuilleté, telle que schématisée par exemple en pointillés sur la figure 4.

Avantageusement, l'agencement conformé à l'invention permet de réaliser au sein d'un même sous ensemble cohérent, manipulable et insérable d'un seul tenant sur une baie du véhicule, plusieurs fenêtres 4, 5 contiguës, le cas échéant de grandes dimensions, et parfaitement transparentes, ce qui optimise le champ visuel procuré par l'élément de vitrage 1.

En outre, l'invention rend possible une différenciation des zones vitrées, en particulier selon leur exposition aux agressions extérieures, dans la mesure où il possible de sélectionner la disposition spatiale et l'étendue d'une part des fenêtres renforcées 5, qui correspondront de préférence aux zones critiques pour la sécurité ou la visibilité, telles que le panneau frontal du pare-brise, et plus particulièrement la zone d'essuyage balayée par les essuie-glaces, et d'autre part des fenêtres allégées 6, qui correspondront de préférence aux zones jugées moins critiques pour la sécurité des occupants du véhicule, telles que par exemple des pans rabattus, de type fenestrons latéraux et/ou avancée panoramique de toit, qui pourront être réalisés exclusivement en matériau polymère.

Avantageusement, en renforçant principalement sinon exclusivement les zones critiques de l'élément de vitrage 1, on peut limiter significativement la quantité et la proportion de verre feuilleté utilisées, et donc alléger globalement l'élément de vitrage 1, par exemple en réduisant son poids d'environ 30 % à 40% au moins par rapport à celui d'un élément équivalent qui serait réalisé intégralement en verre feuilleté, et ce sans pour autant sacrifier les qualités optiques et mécaniques fonctionnelles dudit élément de vitrage 1.

Bien qu'il ne soit pas exclu qu'un même élément de vitrage 1 présente, sur une même infrastructure 2, plusieurs inserts 4 et par conséquent plusieurs fenêtres renforcées 5 séparées les unes des autres par des fenêtres allégées 6 intermédiaires, dépourvues de verre feuilleté, elle comportera de préférence une unique fenêtre renforcée 5, préférentiellement formée par un unique insert 4, qui pourra notamment occuper le pan frontal du pare-brise.

A titre indicatif, la superficie totale de la ou des fenêtres renforcées 5 pourra représenter au moins 30 %, 40 %, 50 % ou 60 % de la superficie globale de l'élément de vitrage 1, et plus particulièrement de la superficie de la paroi transparente 3, et atteindre jusqu'à 80 %, 90 % ou même 95 % de ladite superficie globale apparente de l'élément de vitrage, et plus particulièrement de la superficie de l'une ou l'autre des faces principales continues de la paroi transparente 3, qui s'étendent de façon normale à l'épaisseur de ladite paroi.

Avantageusement, l'étendue de l'insert 4 en verre feuilleté pourra ainsi laisser subsister, pour le reste de la superficie de l'élément de vitrage 1, dans la ou les zones dans lesquelles la paroi transparente 3 de l'infrastructure déborde au-delà des bords dudit insert, une ou des fenêtres allégées 6, qui peuvent notamment occuper les pans rabattus, et en particulier les fenestrons.

En outre, la superficie totale de l'insert 4, c'est-à-dire l'étendue dudit insert considérée selon l'une ou l'autre de ses faces principales normales à son épaisseur, sera de préférence strictement inférieure à celle de l'infrastructure 2.

Plus particulièrement, tel que cela est notamment illustré sur les figures 1 et 2, l'insert 4 en verre feuilleté sera de préférence couvert préférentiellement en majorité, et de façon particulièrement préférentielle en totalité, par la paroi transparente 3 en matériau polymère, contre laquelle ledit insert 4 est accolé et dont il épouse avantageusement la forme.

Tel que cela sera détaillé ci-après, en adossant ainsi l'insert 4 sur toute sa surface (normale à l'épaisseur) à la paroi transparente 3 de l'infrastructure 2, laquelle chevauche totalement ledit insert et en déborde latéralement, on assure un excellent soutien dudit insert 4, porté sur toute son étendue par l'infrastructure 2 sous-jacente, ce qui permet notamment de conférer audit insert une structure simplifiée et/ou amincie, particulièrement légère.

Selon un agencement préférentiel, la pièce d'infrastructure 2 en matériau polymère transparent forme une coque, avantageusement rigide et autoporteuse, qui s'étend d'un seul tenant sur d'une part un pan principal 10, destiné à présenter au moins une composante d'extension verticale lorsque l'élément de vitrage est installé sur le véhicule, et formant préférentiellement un pan frontal sensiblement transverse à la direction de marche du véhicule, et d'autre part un ou plusieurs pans secondaires 11, 12, 13 rabattus, formant un ou des retours latéraux 11, 12 de type fenestrons, par exemple triangulaires ou trapézoïdaux, et/ou un retour supérieur 13, de type toit panoramique destiné à habiller tout ou partie du pavillon du véhicule, lesdits pans secondaires rabattus 11, 12, 13 étant sécants audit pan principal 10 auquel lesdits pans rabattus 11, 12, 13 sont reliés par des arêtes 14.

De préférence, lesdites arêtes 14 sont sensiblement arrondies.

En outre, l'élément de vitrage 1 pourra éventuellement présenter une surépaisseur locale au niveau desdites arêtes 14, tel que cela est illustré sur la figure 3, afin d'améliorer sa résistance mécanique.

Le pan principal 10 pourra quant à lui former un pan frontal occupant sensiblement toute la largeur du véhicule, ainsi que la hauteur reliant le capot au pavillon.

A titre indicatif, la largeur dudit pan principal 10 pourra être supérieure ou égale à 1,00 m et atteindre 1,40 m voire 1,60 m ou davantage. La longueur des arêtes 14 latérales pourra quant à elle être supérieure ou égale à 40 cm, et atteindre par exemple jusqu'à 80 cm, voire 90 cm ou davantage.

L'insert 4 en verre feuilleté pourra se présenter sous la forme d'une plaque, sensiblement plane ou éventuellement légèrement bombée, de préférence centrée sur le pan frontal 10, et venant renforcer la majorité voire la quasi-totalité dudit pan frontal 10.

Ledit pan frontal 10 sera lui-même préférentiellement bordé latéralement des deux côtés par deux pans secondaires latéraux formant fenestrons 11, 12, partageant chacun une arête 14 avec ledit pan frontal 10, et reliés l'un à l'autre par ledit pan frontal 10 qui forme ainsi un pont soutenant l'insert 4.

De préférence, les fenestrons 11, 12 présenteront chacun une superficie strictement inférieure à celle du pan principal 10, et plus particulièrement à celle de l'insert 4, et de préférence sensiblement comprise entre 0,03 m² et 0,5 m².

A titre indicatif, le renvoi d'angle entre le pan principal 10 et chacun des pans latéraux 11, 12, et/ou supérieur 13 pourra correspondre par exemple à une déviation η de l'ordre de 45 degrés à 90 degrés.

Par ailleurs, tel que cela est illustré sur les figures 1 et 3, la fenêtre renforcée 5 s'étend de préférence sur le pan principal 10 en retrait des arêtes 14, vers le centre dudit pan principal, tandis que le ou les pans secondaires 11, 12, 13 forment une ou des fenêtres allégées 6.

Plus particulièrement, les bords latéraux de découpe (chants) de l'insert 4 pourront avantageusement être situés en retrait des arêtes 14, de telle sorte que ledit insert peut présenter une étendue limitée et une forme simple, du genre plaque sensiblement plane, tandis que les portions fortement incurvées des arêtes qui marquent, au sein de l'infrastructure 2, le renvoi d'angle (voire le pli) entre pans 10, 11, 12, 13 voisins, seront réalisées dans le matériau polymère de l'infrastructure 2, plus facile à mettre en forme que le verre, tel que cela est illustré sur les figures 1 et 3.

Toutefois, il n'est pas exclu, selon une autre variante de réalisation correspondant aux figures 4 et 5, que l'insert 4 en verre feuilleté puisse présenter des portions extrémales recourbées habillant en partie les arêtes 14 et amorçant la transition angulaire entre le pan principal 10 et le pan latéral 11, 12 et/ou supérieur 13 correspondant.

Quelle que soit la variante de réalisation retenue, l'invention permet avantageusement de substituer aux montants métalliques ou autres éléments d'encadrement opaques, qui étaient employés jusqu'à présent, de véritables cornières intégrées en matériau transparent, réalisées soit exclusivement dans le matériau polymère de l'infrastructure 2, le cas échéant d'épaisseur renforcée, soit par chevauchement dudit matériau polymère et d'une partie de l'insert 4 en verre. La continuité de la transparence de l'élément de vitrage 1 peut ainsi être assurée sans perte de solidité.

Par ailleurs, l'élément de vitrage 1, et plus particulièrement la coque formant l'infrastructure 2, présentera de préférence un agencement sensiblement symétrique par rapport au plan sagittal P_{S} du véhicule.

Bien entendu, les matériaux transparents utilisés, éventuellement teintés ou fumés, seront de préférence sélectionnés de sorte à présenter une bonne stabilité dans le temps, tant vis-à-vis de leur transparence, et en particulier de leur résistance au jaunissement ou à une quelconque autre variation incontrôlée de teinte, que de leurs propriétés mécaniques, et notamment de leur résilience.

A ce titre, le polymère lui-même est de préférence choisi pour présenter intrinsèquement une excellente résistance aux chocs, de telle sorte que même les fenêtres allégées 6 présentent une robustesse satisfaisante compte-tenu de leur situation et de leur usage.

En particulier, la pièce d'infrastructure 2 pourra être réalisée en polycarbonate, un tel matériau alliant transparence, légèreté et excellentes propriétés mécaniques.

De préférence, l'insert 4 présente quant à lui au moins une feuille de verre 15.

Ladite feuille de verre 15 forme ici préférentiellement la surface apparente extérieure 5E de la fenêtre renforcée 5 de l'élément de vitrage 1, surface qui est destinée à être orientée à l'opposé de l'habitacle dudit véhicule.

Avantageusement, la dureté du verre minéral, supérieure à celle du matériau polymère, permet notamment à la surface apparente de l'élément de vitrage 1, et plus particulièrement de la fenêtre renforcée 5, de mieux résister à l'action abrasive de gravillons, des essuie-glaces ou de rouleaux de lavage, et rend par conséquent la fenêtre renforcée 5 peu sensible aux rayures.

Préférentiellement, l'épaisseur de verre dans l'insert 4 est inférieure ou égale à 2 mm, de préférence inférieure ou égale à 1,5 mm, et de façon particulièrement préférentielle sensiblement égale à 1 mm.

L'agencement proposé par l'invention permet en effet d'affiner significativement la (ou éventuellement les) couches de verre employée(s) dans l'insert 4, du fait que celle(s)-ci est (sont) avantageusement soutenue(s) par l'infrastructure 2. On peut ainsi minimiser globalement l'encombrement et le poids de l'élément de vitrage 1.

En outre, l'épaisseur E15 de la feuille de verre 15, qui pourra à elle seule correspondre aux valeurs susmentionnées, sera de préférence constante sur toute la superficie de l'insert 4.

La paroi transparente 3 en matériau polymère pourra quant à elle présenter une épaisseur E3 sensiblement comprise entre 1 mm et 20 mm.

De préférence ladite épaisseur E3 sera moindre dans la fenêtre renforcée 5 (sous le verre) que dans les fenêtres allégées 6, et préférentiellement sensiblement constante dans ladite fenêtre renforcée 5.

L'invention permet en effet de réaliser une structure modulaire d'assemblage simple, dont les pièces détachées, notamment la feuille en verre 15, sont aisées à fabriquer, et dont l'agencement limite la quantité de verre nécessaire à l'obtention des propriétés mécaniques de la fenêtre renforcée 5.

Par ailleurs, l'insert 4 est de préférence est maintenu à la paroi transparente 3 de la pièce d"infrastructure 2 par une couche d'adhésion 16, préférentiellement en polyuréthane thermoplastique.

Ladite couche d'adhésion 16, avantageusement transparente, interposée entre l'insert 4 et la pièce d'infrastructure 2, couvre de préférence de façon continue et homogène toute la surface de recouvrement sur laquelle l'insert 4 se superpose la paroi transparente 3.

L'épaisseur de ladite couche d'adhésion 16 est par ailleurs de préférence sensiblement constante, et préférentiellement sensiblement égale à 1 mm.

De préférence, l'insert 4, et plus particulièrement sa feuille de verre 15, sera fixé directement sur la pièce d'infrastructure 2 par au plus une unique couche d'adhésion 16 intermédiaire.

Bien entendu, il est envisageable d'employer pour la fixation de l'insert 4 sur l'infrastructure 2 d'autres matériaux que le polyuréthane thermoplastique, et par exemple des résines transparentes.

Toutefois, de telles résines seront de préférences réservées à un collage par point ou par cordon en bordure du champ visuel, alors que le polyuréthane permettra de former une couche d'adhésion 16 transparente et continue sans gêner la visibilité, et notamment sans occasionner de variation locale de teinte, de transparence ou de distorsion de l'image perçue à travers l'élément de vitrage 1.

Il est par ailleurs envisageable de compléter la jonction entre l'insert 4 et la pièce d'infrastructure 2 en comblant l'interstice existant entre le chant 17 dudit insert 4 (et plus particulièrement de sa feuille de verre 15) et le rebord 18 correspondant de ladite pièce d'infrastructure, de préférence de type rebord d'épaulement, lesdits chant 17 et rebord d'épaulement 18 étant par ailleurs préférentiellement parallèles entre eux et/ou sensiblement perpendiculaires à la surface apparente 5E de la fenêtre renforcée, et plus globalement perpendiculaires à la surface apparente de l'élément de vitrage 1.

A cet effet, on pourra éventuellement utiliser, tel que cela est illustré sur la figure 5, une bande de joint 20 en caoutchouc, présentant par exemple une section transverse en forme de champignon, dont le pied pénètre dans l'interstice et le chapeau vient en appui pour partie sur la surface apparente 5E de la fenêtre renforcée 5, et pour partie sur celle, voisine, de la fenêtre allégée 6.

Toutefois, afin de privilégier la continuité de la transparence de l'élément de vitrage 1, et/ou afin de conférer à la jonction un aspect lisse, l'insert 4 étant monté affleurant, sans élément saillant, dans le prolongement de la fenêtre allégée 6 voisine, on pourra avantageusement combler ledit interstice par un embranchement de la couche d'adhésion 16, préférentiellement en polyuréthane, tel que cela est illustré sur la figure 4.

Par ailleurs, l'insert 4 comprend de préférence un unique intercalaire de feuilletage 21, avantageusement destiné à prévenir l'éclatement, en cas de choc, de la ou des feuilles de verre 15 constitutives dudit insert 4.

De préférence, ledit intercalaire de feuilletage 21 est disposé entre une feuille de verre 15 dudit insert 4 et la paroi transparente 3 de la pièce d'infrastructure 2, de telle sorte que ledit intercalaire forme également la couche d'adhésion 16 assurant la fixation dudit insert 4 à la paroi 3 en matériau polymère de ladite pièce d'infrastructure 2, tel que cela est notamment illustré sur les figures 2 à 5.

De façon particulièrement préférentielle, ledit intercalaire 21 pourra être formé par une seule et même feuille en polyuréthane thermoplastique. La bordure de ladite feuille pourra le cas échéant être repliée en équerre (en L) de sorte à remplir l'interstice entre le chant 17 de la feuille de verre 15 de l'insert 4 et le rebord d'épaulement 18.

Avantageusement, l'invention permet ainsi d'assurer deux fonctions, de feuilletage et de fixation, au moyen d'une seule et même couche, et donc de réaliser une structure mixte de type « sandwich » tri-couches minimaliste, à la fois légère et résistante, de manière particulièrement simple, compacte et économe en matériaux.

Plus particulièrement, l'élément de vitrage 1 pourra comporter, dans la fenêtre renforcée 5, exactement trois couches, dont une seule couche d'infrastructure 2 porteuse en polymère transparent, du genre polycarbonate, formée par la paroi 3 et préférentiellement orientée vers l'habitacle, une seule couche de feuilletage-adhésion 16, 21, du genre feuille de polyuréthane, et enfin une seule couche de verre, du genre feuille de verre 15, préférentiellement orientée vers l'extérieur du véhicule, lesdites couches étant directement empilées les unes contre les autres dans cet ordre.

Il n'est par ailleurs pas exclu, selon un agencement non représenté, de disposer l'insert 4 en saillie sur la paroi transparente 3.

Toutefois, la paroi transparente 3 en matériau polymère présentera de préférence, au niveau de la fenêtre renforcée 5, un renfoncement creusé dans son épaisseur de sorte à former un logement 22 épaulé qui retient l'insert en verre feuilleté par un ou plusieurs chants 17 de ce dernier.

Plus particulièrement, ledit logement pourra former ainsi, de préférence en section transverse aux arêtes 14, une monture transparente en U, dans laquelle est enchâssé l'insert 4, auquel des rebords d'épaulement 18 offrent une lèvre porteuse permettant une sorte de prise en feuillure dudit insert.

Le logement 22, et plus particulièrement le ou les rebords d'épaulement 18, pourront courir en vis-à-vis d'au moins deux côtés, voire trois côtés de l'insert 4, et plus particulièrement de la feuille de verre 15. En particulier, le logement 22 pourra border et bloquer les deux bords latéraux extrémaux (gauche et droite) de l'insert 4, tel que cela est illustré sur la figure 1, ou bien encore le bord inférieur et un ou deux bord latéral.

Par ailleurs, le fond 22A dudit logement 22 forme avantageusement la portion de paroi transparente 3 de la fenêtre renforcée 5, préférentiellement amincie, couverte par l'insert 4, et préférentiellement le pont, légèrement bombé vers l'extérieur, reliant les fenestrons 11, 12 l'un à l'autre.

Ainsi, la face principale cachée de l'insert 4, et plus particulièrement la face principale cachée 15l de la feuille de verre 15, opposée à la surface apparente 5E, qui présente de préférence une forme sensiblement conjuguée à celle dudit fond 22A, peut avantageusement venir sensiblement en appui-plan contre ledit fond 22A, au contact de ce dernier de préférence sur toute leur étendue commune.

Grâce au logement 22, l'invention permet avantageusement la mise en place d'un insert 4, et plus particulièrement d'une feuille de verre 15, particulièrement bien maintenu, sous forme d'inclusion, parallèlement à la surface apparente de l'élément de vitrage, dans l'épaisseur de la pièce d'infrastructure 2 en polymère, elle-même de plus grandes dimensions que ledit insert 4.

Par ailleurs, l'élément de vitrage 1 pourra comporter, de préférence de part et d'autre du pan frontal 10, le long des arêtes 14, un ou des rebords de canalisation 23 saillants formant des gouttières conçues pour canaliser et évacuer, de préférence vers le pavillon, l'eau, et notamment la pluie, circulant sur ledit élément de vitrage 1, et plus particulièrement sur la fenêtre renforcée 5, tel que cela est illustré sur les figures 1 et 3.

Le rebord de canalisation 23 pourra avantageusement être venu de matière avec la pièce d'infrastructure 2, et notamment former un bourrelet prolongeant le rebord d'épaulement 18 de sorte à dépasser, en surépaisseur, la surface apparente 5E de la fenêtre renforcée 5.

*A contrario,* tel qu'il a été dit plus haut, la face apparente extérieure de l'insert 4, et plus particulièrement de la feuille de verre 15, pourra être disposée de manière affleurante dans le prolongement de la face extérieure de la fenêtre allégée 6 qui lui est immédiatement voisine, de sorte à former, tel que cela est illustré sur la figure 4, une jonction lisse, de préférence de courbure continue, continûment transparente, et éventuellement polie pour une meilleure finition.

Bien entendu, l'homme du métier sera à même d'isoler ou de combiner entre elles tout ou partie des caractéristiques décrites ci-dessus, en particulier selon la forme, la silhouette, les propriétés optiques et mécaniques, ou bien encore les fonctions qu'il souhaite conférer à l'élément de vitrage 1.

L'invention concerne également en tant que tel un procédé de fabrication d'un élément de vitrage 1 pour véhicule.

Ledit procédé comprend une étape (a) de réalisation d'une pièce d'infrastructure 2 au cours de laquelle on met en forme, par exemple par moulage par injection ou par thermoformage, un matériau polymère transparent, de préférence du polycarbonate, pour créer une paroi transparente 3 de forme prédéterminée, puis une étape (b) de différenciation au cours de laquelle on fixe sur ladite pièce d'infrastructure 2, de préférence à l'aide d'une couche d'adhésion et de feuilletage 16, 20 en polyuréthane thermoplastique, un insert 4 en verre feuilleté couvrant une superficie de ladite pièce d'infrastructure strictement inférieure à la superficie totale de ladite pièce d'infrastructure, et de préférence présentant lui-même une superficie hors-tout strictement inférieure à celle de ladite pièce d'infrastructure 2, de sorte à créer, au sein de l'élément de vitrage 1, au moins une première fenêtre renforcée 5 correspondant à la portion de paroi transparente 3 recouverte par l'insert 4 et au moins une seconde fenêtre allégée 6 correspondant à la portion de paroi transparente 3 dépourvue de verre feuilleté.

En particulier, on pourra ainsi enchâsser une feuille de verre 15 et son intercalaire de feuilletage 21 par inclusion dans l'épaisseur d'une coque monolithique rigide en polymère constituant la pièce infrastructure 2, et plus particulièrement dans un logement 22 creusé dans l'épaisseur de l'un des pans vitrés sécants 10, 11, 12, 13 parmi la pluralité de pans vitrés que comprend ladite coque.

La fixation de l'insert 4 contre la paroi transparente 3 pourra par exemple intervenir par pressage à chaud dudit insert 4 contre ladite paroi 3, de sorte à provoquer l'adhésion d'un intercalaire de feuilletage 21 tant avec la feuille de verre 15 qu'avec la paroi 3 en polymère. Le cas échéant, l'insert 4 pourra être préconstitué par une feuille de verre 15 préalablement feuilletée par son intercalaire 21, l'ensemble étant ensuite rapporté et fixé à chaud sur la paroi transparente 3.

En définitive, grâce à sa conception modulaire, l'invention présente une grande polyvalence, qui permet de maximiser l'étendue des surfaces vitrées, tout en autorisant une grande liberté de design.

Elle permet avantageusement d'obtenir un élément de vitrage 1 présentant un bon aspect esthétique et aérodynamique, globalement allégé, mais toutefois robuste, et continûment transparent, notamment aux jonctions entre pans vitrés sécants adjacents.

## Revendications

1. Elément de vitrage (1) pour véhicule comprenant une pièce d'infrastructure (2) qui est réalisée dans un matériau polymère transparent, lequel est agencé de sorte à former une paroi transparente (3), **caractérisé en ce qu'**il comprend au moins un insert (4) en verre feuilleté qui est fixé sur ladite pièce d'infrastructure de manière à se superposer à l'épaisseur (E3) de la paroi transparente (3) sur une partie de la superficie de ladite paroi transparente, de telle sorte que l'élément de vitrage (1) présente au moins une première fenêtre renforcée (5) correspondant à la portion de paroi transparente recouverte par l'insert et au moins une seconde fenêtre allégée (6) correspondant à la portion de paroi transparente (3) dépourvue de verre feuilleté.

2. Elément de vitrage selon la revendication 1 **caractérisé en ce que** la pièce d'infrastructure (2) est réalisée en polycarbonate.

3. Elément de vitrage selon la revendication 1 ou 2 **caractérisé en ce que** l'épaisseur de verre dans l'insert (4) est inférieure ou égale à 2 mm, de préférence inférieure ou égale à 1,5 mm, et de façon particulièrement préférentielle sensiblement égale à 1 mm.

4. Elément de vitrage selon l'une des revendications 1 à 3 **caractérisé en ce que** l'insert (4) comprend une unique feuille de verre (15), réalisée d'un seul tenant.

5. Elément de vitrage selon l'une des revendications précédentes **caractérisé en ce que** l'insert (4) comprend un unique intercalaire de feuilletage (21), disposé entre une feuille de verre (15) dudit insert et la paroi transparente (3) de la pièce d'infrastructure (2), de telle sorte que ledit intercalaire (21) forme également la couche d'adhésion (16) assurant la fixation dudit insert (4) à la paroi (3) en matériau polymère de ladite pièce d'infrastructure.

6. Elément de vitrage selon l'une des revendications précédentes **caractérisé en ce que** l'insert (4) est maintenu à la paroi transparente (3) de la pièce d"infrastructure (2) par une couche d'adhésion (16) en polyuréthane thermoplastique.

7. Elément de vitrage selon l'une des revendications précédentes **caractérisé en ce que** l'insert (4) présente au moins une feuille de verre (15) qui forme la surface apparente extérieure (5E) de la fenêtre renforcée (5) de l'élément de vitrage (1), surface (5E) qui est destinée à être orientée à l'opposé de l'habitacle dudit véhicule.

8. Elément de vitrage selon l'une des revendications précédentes **caractérisé en ce que** la paroi transparente (3) en matériau polymère présente, au niveau de la fenêtre renforcée (5), un renfoncement creusé dans son épaisseur de sorte à former un logement (22) épaulé qui retient l'insert en verre feuilleté (4) par un ou plusieurs chants (17) de ce dernier.

9. Elément de vitrage selon l'une des revendications précédentes, **caractérisé en ce que** ledit élément de vitrage (1) comporte, de préférence de part et d'autre d'un pan frontal (10), un ou des rebords de canalisation (23) saillants formant des gouttières conçues pour canaliser et évacuer, de préférence vers le pavillon, l'eau, et notamment la pluie, circulant sur ledit élément de vitrage (1).

10. Elément de vitrage selon la revendication 9, **caractérisé en ce que** le rebord de canalisation (23) est venu de matière avec la pièce d'infrastructure (2), et notamment forme un bourrelet prolongeant le rebord d'épaulement (18) de sorte à dépasser, en surépaisseur, la surface apparente (5E) de la fenêtre renforcée (5).

11. Elément de vitrage selon l'une des revendications précédentes **caractérisé en ce que** la pièce d'infrastructure (2) en matériau polymère transparent forme une coque qui s'étend d'un seul tenant sur d'une part un pan principal (10), destiné à présenter au moins une composante d'extension verticale lorsque l'élément de vitrage est installé sur le véhicule, et d'autre part un ou plusieurs pan secondaires rabattus (11, 12, 13), formant un ou des retours latéraux (11, 12) et/ou supérieur (13), qui sont sécants audit pan principal et reliés à ce dernier par des arêtes (14), de préférence sensiblement arrondies, et **en ce que** la fenêtre renforcée (5) s'étend sur ledit pan principal (10), de préférence en retrait des arêtes (14), tandis que le ou les pans secondaires (11, 12, 13) forment une ou des fenêtres allégées (6).

12. Véhicule équipé d'un élément de vitrage (1) selon l'une des revendications précédente, qui forme de préférence un pare-brise ou une lunette arrière.

13. Procédé de fabrication d'un élément de vitrage (1) pour véhicule comprenant une étape (a) de réalisation d'une pièce d'infrastructure (2) au cours de laquelle on met en forme, tel que par moulage par injection, un matériau polymère transparent, de préférence du polycarbonate, pour créer une paroi transparente (3) de forme prédéterminée, puis une étape (b) de différenciation au cours de laquelle on fixe sur ladite pièce d'infrastructure (2), de préférence à l'aide d'une couche d'adhésion et de feuilletage (16, 21) en polyuréthane thermoplastique, un insert (4) en verre feuilleté couvrant une superficie de ladite pièce d'infrastructure strictement inférieure à la superficie totale de ladite pièce d'infrastructure, de sorte à créer, au sein de l'élément de vitrage, au moins une première fenêtre renforcée (5) correspondant à la portion de paroi transparente recouverte par l'insert et au moins une seconde fenêtre allégée (6) correspondant à la portion de paroi transparente (3) dépourvue de verre feuilleté.

## Patentansprüche

1. Verglasungselement (1) für Fahrzeug, das ein Infrastrukturteil (2) umfasst, das aus einem durchsichtigen Polymerwerkstoff hergestellt ist, das derart eingerichtet ist, dass es eine durchsichtige Wand (3) bildet, **dadurch gekennzeichnet, dass** es mindestens einen Einsatz (4) aus laminiertem Glas umfasst, der auf dem Infrastrukturteil derart befestigt ist, dass er sich auf der Stärke (E3) der durchsichtigen Wand (3) auf einem Teil der Oberfläche der durchsichtigen Wand derart überlagert, dass das Verglasungselement (1) mindestens ein verstärktes Fenster (5) aufweist, das dem durchsichtigen Abschnitt der Wand entspricht, der von dem Einsatz abgedeckt wird, und mindestens ein zweites leichtes Fenster (6), das dem durchsichtigen Abschnitt der Wand (3), der kein laminiertes Glas aufweist, entspricht.

2. Verglasungselement nach Anspruch 1, **dadurch gekennzeichnet, dass** das Infrastrukturteil (2) aus Polycarbonat hergestellt ist.

3. Verglasungselement nach Anspruch 1 oder 2, **dadurch gekennzeichnet, dass** die Glasstärke in dem Einsatz (4) kleiner oder gleich 2 mm ist, bevorzugt kleiner oder gleich 1,5 mm und besonders bevorzugt im Wesentlichen gleich 1 mm.

4. Verglasungselement nach einem der Ansprüche 1 bis 3, **dadurch gekennzeichnet, dass** der Einsatz (4) eine einzige Glasscheibe (15), die aus einem einzigen Stück hergestellt ist, umfasst.

5. Verglasungselement nach einem der vorhergehenden Ansprüche, **dadurch gekennzeichnet, dass** der Einsatz (4) eine einzige laminierte Einlage (21) umfasst, die zwischen einer Glasscheibe (15) des Einsatzes und der durchsichtigen Wand (3) des Infrastrukturteils (2) derart angeordnet ist, dass die Einlage (21) auch die Haftschicht (16) bildet, die das Befestigen des Einsatzes (4) am der Wand (3) aus Polymerwerkstoff des Infrastrukturteils sicherstellt.

6. Verglasungselement nach einem der vorhergehenden Ansprüche, **dadurch gekennzeichnet, dass** der Einsatz (4) an der durchsichtigen Wand (3) des Infrastrukturteils (2) durch eine Haftschicht (16) aus Thermoplast-Polyurethan gehalten wird.

7. Verglasungselement nach einem der vorhergehenden Ansprüche, **dadurch gekennzeichnet, dass** der Einsatz (4) mindestens eine Glasscheibe (15) aufweist, die die sichtbare äußere Oberfläche (5E) des verstärkten Fensters (5) des Verglasungselements (1) bildet, wobei die Oberfläche (5E) dazu bestimmt ist, der Fahrgastzelle des Fahrzeugs entgegengesetzt ausgerichtet zu sein.

8. Verglasungselement nach einem der vorhergehenden Ansprüche, **dadurch gekennzeichnet, dass** die durchsichtige Wand (3) aus Polymerwerkstoff im Bereich des verstärkten Fensters (5) eine Vertiefung aufweist, die in ihre Stärke derart gehöhlt ist, dass eine Aufnahme (22) mit Ansatz gebildet ist, die den Einsatz aus laminiertem Glas (4) durch eine oder mehrere Kanten (17) dieser Letzteren zurückhält.

9. Verglasungselement nach einem der vorhergehenden Ansprüche, **dadurch gekennzeichnet, dass** das Verglasungselement (1) vorzugsweise zu beiden Seiten einer Vorderseitenbahn (10) einen oder mehrere vorstehende Kanalisationsränder (23) umfasst, die Rinnen bilden, die konzipiert sind, um Wasser und insbesondere Regen, das/der auf dem Verglasungselement (1) zirkuliert, zu kanalisieren und bevorzugt zu dem Dach abzuleiten.

10. Verglasungselement nach Anspruch 9, **dadurch gekennzeichnet, dass** der Kanalisationsrand (23) aus einem Teil mit dem Infrastrukturteil (2) besteht und insbesondere einen Wulst bildet, der den Ansatzrand (18) derart verlängert, dass in Überdicke die sichtbare Oberfläche (5E) des verstärkten Fensters (5) überschritten wird.

11. Verglasungselement nach einem der vorhergehenden Ansprüche, **dadurch gekennzeichnet, dass** das Infrastrukturteil (2) aus durchsichtigem Polymerwerkstoff eine Schale bildet, die sich aus einem Stück einerseits auf einer Hauptbahn (10) erstreckt, die dazu bestimmt ist, mindestens eine vertikale Erweiterungskomponente aufzuweisen, wenn das Verglasungselement auf dem Fahrzeug installiert ist, und andererseits eine oder mehrere zurückgeschlagene Nebenbahnen (11, 12, 13), die einen oder mehrere seitliche (11, 12) und/oder obere (13) Rückläufe bilden, die die Hauptbahn schneiden und mit dieser Letzteren durch Kanten (14), die vorzugsweise im Wesentlichen gerundet sind, verbunden sind, und dass sich das verstärkte Fenster (5) auf der Hauptbahn (10) bevorzugt von den Kanten (14) rückwärts versetzt erstreckt, während die Hilfsbahn(en) (11, 12, 13) ein oder mehrere leichte Fenster (16) bildet/bilden.

12. Fahrzeug, das mit einem Verglasungselement (1) nach einem der vorhergehenden Ansprüche ausgestattet ist, das bevorzugt eine Windschutzscheibe oder ein Heckfenster bildet.

13. Verfahren zur Herstellung eines Verglasungselements (1) für Fahrzeug, das einen Schritt (a) des Herstellens eines Infrastrukturteils (2) umfasst, in dessen Verlauf man zum Beispiel durch Spritzguss einen durchsichtigen Polymerwerkstoff, bevorzugt Polycarbonat, formt, um eine durchsichtige Wand (3) mit vorbestimmter Form zu bilden, dann einen Differenzierungsschritt (b), in dessen Verlauf man auf dem Infrastrukturteil (2) bevorzugt mit Hilfe einer Haft- und Laminierungsschicht (16, 21) aus Thermoplast-Polyurethan einen Einsatz (4) aus laminiertem Glas befestigt, der eine Oberfläche des Infrastrukturteils abdeckt, die strikt kleiner ist als die gesamte Oberfläche des Infrastrukturteils, so dass innerhalb des Vergasungselements mindestens ein verstärktes Fenster (5) gebildet wird, das dem Abschnitt durchsichtiger Wand, der durch den Einsatz abgedeckt ist, entspricht, und mindestens ein zweites leichtes Fenster (6), das dem Abschnitt durchsichtiger Wand (3) ohne laminiertes Glas entspricht.

## Claims

1. A glazing element (1) for a vehicle including an infrastructure component (2) made of a transparent polymer material, which is designed to form a transparent wall (3), **characterized in that** it includes at least one insert (4) made of laminated glass which is fixed to said infrastructure component in such a way as to be superimposed with the thickness (E3) of the transparent wall (3) over part of the surface area of said transparent wall, so that the glazing element (1) has at least one first reinforced window (5) corresponding to the portion of the transparent wall that is covered by the insert, and at least one second lightweight window (6) corresponding to the portion of the transparent wall (3) that is not provided with laminated glass.

2. The glazing element according to claim 1, **characterized in that** the infrastructure component (2) is made of polycarbonate.

3. The glazing element according to claim 1 or 2, **characterized in that** the thickness of glass in the insert (4) is less than or equal to 2 mm, preferably less than or equal to 1.5 mm, and particularly preferably substantially equal to 1 mm.

4. The glazing element according to one of claims 1 to 3, **characterized in that** the insert (4) includes a single sheet of glass (15) made in one piece.

5. The glazing element according to one of the preceding claims, **characterized in that** the insert (4) includes a single lamination spacer (21), disposed between a sheet of glass (15) of said insert and the transparent wall (3) of the infrastructure component (2), such that said spacer (21) also forms the adhesion layer (16) ensuring the fixing of said insert (4) to the wall (3) of polymer material of said infrastructure component.

6. The glazing element according to one of the preceding claims, **characterized in that** the insert (4) is held at the transparent wall (3) of the infrastructure component (2) by an adhesion layer (16) made of thermoplastic polyurethane.

7. The glazing element according to one of the preceding claims, **characterized in that** the insert (4) has at least one sheet of glass (15) which forms the exposed exterior surface (5E) of the reinforced window (5) of the glazing element (1), which surface (5E) is intended to be oriented opposite the passenger compartment of said vehicle.

8. The glazing element according to one of the preceding claims, **characterized in that** the transparent wall (3) made of polymer material has, at the level of the reinforced window (5), a reinforcement hollowed in its thickness so as to form a shouldered housing (22) which holds the laminated glass insert (4) by one or several edges (17) of the latter.

9. The glazing element according to one of the preceding claims, **characterized in that** said glazing element (1) comprises, preferably on either side of a frontal section (10), one or more projecting channelling rims (23) forming gutters designed to channel and evacuate, preferably towards the roof, the water, and preferably the rain, circulating on said glazing element (1).

10. The glazing element according to claim 9, **characterized in that** the channelling rim (23) is integrally formed with the infrastructure component (2), and in particular forms a bead extending the shoulder edge (18) so as to exceed, in excess thickness, the exposed surface (5E) of the reinforced window (5).

11. The glazing element according to one of the preceding claims, **characterized in that** the infrastructure component (2) made of transparent polymer material forms a shell which extends in one piece over, on the one hand, a main section (10), intended to present at least one component of vertical extension when the glazing element is installed on the vehicle, and on the other hand one or more secondary wrapped-around sections (11, 12, 13), forming one or more lateral (11, 12) and/or upper (13) returns, which are secant to said main section and connected to the latter by preferably substantially rounded ridges (14), and **in that** the reinforced window (5) extends over said main section (10), preferably away from the ridges (14), whilst the secondary section or sections (11, 12, 13) form one or more lightweight windows (6).

12. A vehicle equipped with a glazing element (1) according to one of the preceding claims, which preferably forms a windscreen or a rear window.

13. A method for the manufacture of a glazing element (1) for a vehicle including a step (a) of creation of an infrastructure component (2), during which there is shaped, such as by injection moulding, a transparent polymer material, preferably polycarbonate, to create a transparent wall (3) of predetermined shape, then a step (b) of differentiation, during which there is fixed on said infrastructure component (2), preferably by means of an adhesion and lamination layer (16, 21) of thermoplastic polyurethane, an insert (4) made of laminated glass covering a surface area of said infrastructure component strictly less than the total surface area of said infrastructure component, so as to create, within the glazing element, at least one first reinforced window (5) corresponding to the portion of transparent wall covered by the insert, and at least one second lightweight window (6) corresponding to the portion of transparent wall (3) that is not provided with laminated glass.
